# EUROPEAN PATENT APPLICATION

(11) **EP 2 169 876 A1**
(43) Date of publication of application: **31.03.2010**
(21) Application number: 08305624.2
(22) Date of filing: 30.09.2008
(51) Int. Cl.: H04L 12/24

(54) **Method for restoring connections in a network**

(71) Applicant: Alcatel Lucent, 75008 Paris (FR)
(72) Inventor: Ansorge, Stefan, 73275, Ohmden (DE)
(74) Representative: Urlichs, Stefan

(57) **Abstract**

The present invention relates to a method for restoring connections in a network, in particular in a telecommunication network, the network being provided with a data plane, a control plane and a number of nodes (1, 2, 3, 4, 5, 6, 7), comprising:
- detecting and localizing a fault (F) within the network,
- determining affected connections,
- selecting alternative paths (1-5-3-4, 1-2-7-4, 1-5-2-3-4, 1-2-5-3-4, 1-2-3-6-4) available to recover said failed connections,
- replacing nominal paths (1-2-3-4) of the affected connections with selected alternative paths (1-5-3-4, 1-2-7-4, 1-5-2-3-4, 1-2-5-3-4, 1-2-3-6-4) for realizing said connections.

For optimizing the restoration of the connections
- for detecting the fault (F), determining the affected connections, defining and sorting a list of affected connections according to priority and bandwidth and sending out the list in the control plane a control plane element of a fault adjacent node (2) is used,
- for receiving the sorted list and initiating the replacing of nominal paths (1-2-3-4) of the affected connections with selected alternative paths (1-5-3-4, 1-2-7-4, 1-5-2-3-4, 1-2-5-3-4, 1-2-3-6-4) in order of the list of sorted connections, control plane elements (CPE) of terminating network nodes (1) of the nominal paths (1-2-3-4) is used.

## Description

The present invention relates to a method for restoring connections in a network, in particular in a telecommunication network, the network being provided with a data plane, a control plane and a number of nodes, comprising:
- detecting and localizing a fault within the network,
- determining affected connections,
- selecting alternative paths available to recover said failed connections,
- replacing nominal paths of the affected connections with selected alternative paths for realizing said connections.

Moreover the present invention relates to a control plane element for a network, a network, a processor program product and memory means storing the processor program product.

Networks, in particular telecommunication networks, like any other system, are subject to faults.

When a fault occurs within a network, it is necessary to recover from the fault as soon as possible.

In an operating network several connections are active at the same time and each of these connections has a nominal path within the network. A fault may affect some of the active connections. The connections affected by the fault need to be restored.

According to prior art methods the failed connections are restored independently from different source nodes within the network. In a network which is utilized almost to the full a number of problems can arise.
- Since the affected connections can have different priorities, it might happen that low priority paths are restored before high priority paths. This can lead to preemption of low priority paths by high priority paths leading to crank-back and hence and multiple restorations on low priority paths.
- Further the affected connections can have different bandwidths even if they have the same priority. In case low bandwidth connections are established first, the alternate paths being fragmented. This may lead to insufficient resources for high bandwidth connections that then cannot be restored.

Standardization in this field was and is carried out by the Internet Engineering Task Force (IETF). IETF RFC 2205, 3209 and 3473 define failure notifications to inform the source node of a list of affected connections, especially label switched paths (LSP), but no optimization is assumed to perform restoration in an optimized way.

The problem to be solved by the invention is to optimize the restoration of connections in a network, in particular in a telecommunication network.

The present invention solves this problem in defining and sorting a list of affected connections according to priority and bandwidth and sending out the list in the control plane using a control plane element of a fault adjacent node,
- receiving the sorted list and initiating the replacing of nominal paths of the affected connections with selected alternative paths in order of the list of sorted connections, using control plane elements of terminating network nodes of the affected nominal paths.

According to the invention, the affected connections are sorted in a given manner depending on priority and bandwidth. The restoration will be triggered in the sequence order of the sorted list. This minimizes the restoration actions on low priority connections as high priority connections are setup first. Also it minimizes the fragmentation of link resources due to low bandwidth connections prior to high bandwidth requests. In this way instead of restoring by trial-and-error, the sequence of processing is optimized to minimize crank-back for preemption or resource outage because of blocking due to small bandwidth connections blocking a multiplexer of the network to establish higher bandwidth. So also multiple rerouting actions are minimized. All in all this method optimizes the restoration performance from the scope of a local source node. By using the control plane elements of the fault adjacent nodes, the sequence of restoration can be organized fast and nearby the fault. This reduces information transfer concerning the fault as well as the total recovery time.

In a preferred embodiment the list of affected connections can be sorted according to priority first and to bandwidth second. That means that in addition to sorting the affected connections according to priority with highest priority first, all connections with the same priority can be sorted for bandwidth in decreasing order with the highest bandwidth first. The connection with the highest priority and the highest bandwidth within its priority level is hence restored first.
Preferably for each affected terminating network node a sorted list only of those affected connections which belong to said affected terminating network node can be created and sended. So the data for restoration is reduced to a minimum.

If the fault occurs in a link which is part of a bundle of parallel links, in another very advantageous embodiment it can be identified which of said affected connections can be restored by at least one of said parallel links within the same bundle and said identified affected connections can be restored locally in particular by use of the control plane element of the fault adjacent node and those affected connections, which cannot be restored by one of said parallel links within the same bundle can be sorted in said list and replaced in the order of said listThereby a bundle is formed by a set of parallel links between two adjacent nodes. In this way a number of connections can be restored easy and fast using a local restoration mechanism redirecting the paths across at least one of the parallel links. This way, capacity is used that is available in parallel links between the two adjacent nodes. This prevents that the entire bundle is excluded from restoration if only a single link fails, which would be the case according to prior art methods. In essence, the affected connections can basically be sorted into two groups:
a) Connections that can be restored by means of a parallel link within the same bundle of the failure link. Depending on the number and bandwidth of the affected connections and the remaining capacity in the bundle, all or only some of the affected connections can be restored locally. Typically connections with the highest priority and bandwidth will be placed into this group until the capacity limit of the bundle is reached. The local restoration can easily be handled between the two adjacent nodes using a mechanism like Fast Reroute (Bypass) over at least one single link. Preferably two parallel links can be used for local restoration. Local restoration is also possible when using Time Division Multiplexing (TDM).
b) The remaining affected connections can be sorted in the said list and restored according to the method according to the invention.

To accelerate restoration, according to a further improved embodiment, those affected connections which can be restored over a parallel link are being restored independently from said sorted list. This has the advantage, that the local restoration and the restoration based on the sorted list can substantially be carried out simultaneously.

The inventive control plane element is adapted for detecting a fault within the network, determining the affected connections, defining and sorting a list of affected connections according to priority and bandwidth and sending out the list in a control plane.

The inventive network comprises a number of control plane elements being adapted for detecting a fault within the network, determining affected connections, defining and sorting a list of affected connections according to priority and bandwidth and sending out the list in a control plane.

For a better understanding of the present invention and to understand how the same may be brought into effect, reference will now be made, by way of example only, to the accompanying drawings, in which
- figure 1: illustrates schematically a simplified telecommunication network;
- figure 2: illustrates schematically a telecommunication network equipment used for all the nodes of the network of figure 1;
- figure 3: illustrates schematically a flow diagram of a method for restoring connections in the network of figure 1.

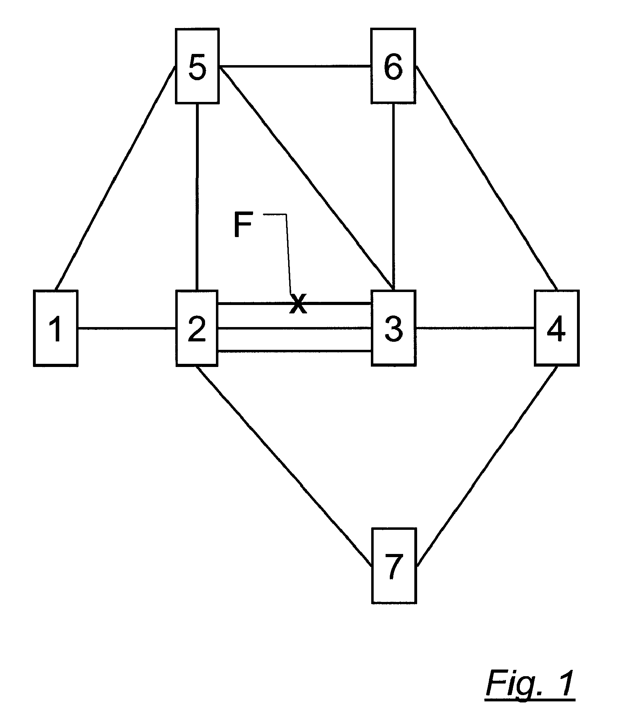

The telecommunication network of figure 1 contains seven nodes, respectively labelled 1, 2, 3, 4, 5, 6, 7, ten single links, i. e. 1-5, 1-2, 2-5, 2-7, 5-3, 5-6, 6-3, 6-4, 3-4 and 7-4 and one bundle 2-3 of three parallel links.

The network is based on a generalized multiprotocol label switching protocol(GMPLS). The network is hence divided into a data plane and a control plane. In the data plane the transport and the switching of data streams takes place. The control plane takes care of the resource management. GMPLS consists of several protocols, including routing protocols e.g. OSPF-TE (open shortest path first - traffic engineering), link management protocols (LMP), and reservation/label distribution protocols e.g. RSVP-TE(resource reservation protocol - traffic engineering).

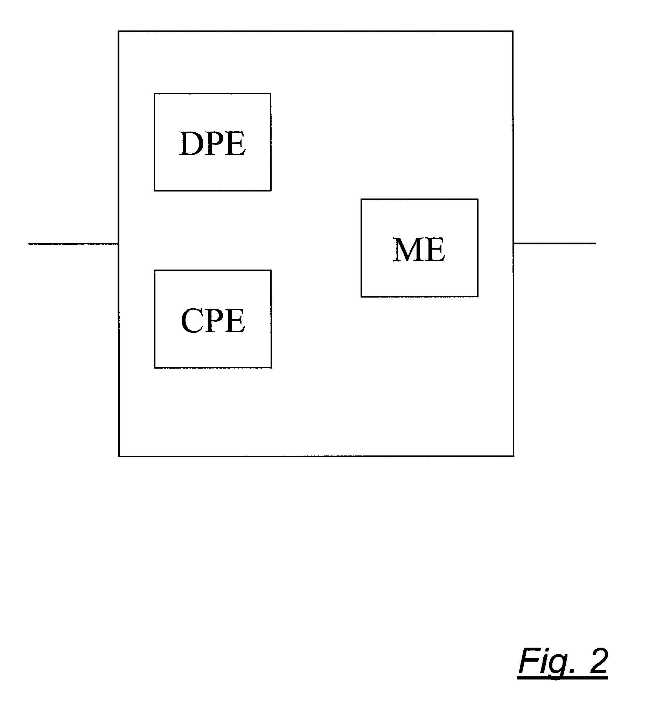

Each node 1 to 7 has an equipment shown in figure 2. The equipment comprises a data plane element DPE, a control plane element CPE and a memory element ME, which are interconnected.

The data plane element DPE is further linked to other data plane elements DPE of the network by means of the links shown in figure 1. The control plane element CPE is further linked to other control plane elements CPE of the network through control plane communication not shown in figure 1. The distributed control plane can be interconnected for instance over a dedicated data network such as an Ethernet based LAN or WAN. Alternatively, control plane traffic can be exchanged over links of the date plane, for example, through different wavelengths or using dedicated overhead bytes such as the DCC bytes (data control channel).

Within the control plane, information about topology and configuration of the network can be exchanged between the control plane elements CPE. Such exchange is carried out through the OSPF-TE routing protocol. Other routing protocols such as IS-IS can also be used. Each memory element ME stores the topology and configuration of the whole network in a local traffic engineering database.

The method of the present invention serves for restoring a connection in a telecommunication network provided with a data plane and a distributed control plane.

A connection corresponds to a nominal path within the network and, in general if no fault is present, the connection is realized through the nominal path.

Obviously, there is a need to restore a connection when such connection is interrupted due to a fault in the network. For this the network contains a processor program product comprising program code portions adapted for the implementation of a method for restoring connections, which is stored by means of the memory elements ME and which can be executed by means of the control plane elements CPE and the data plane elements DPE.

The method for restoring connections provides that each control plane element CPE has the ability to independently select alternative paths which are at least partially disjoint from said nominal path. Deleting path segments, provisioning path segments and maintaining path segments may be carried out by control plane elements CPE of the control plane of the network through a control plane signalling protocol. With reference to figure 2, the control plane element CPE of the source node 1 takes a decision to delete, provision or maintain a path segment as a consequence of communication between the control plane element CPE and other control plane elements CPE of the telecommunication network; such communication is carried out through the RSVP-TE signalling protocol. Other signalling protocols can also be used.

With reference to the example of figure 1, a plurality of connections with different priorities and bandwidths are established between terminating network nodes 1 and 4 over the nominal path using the nominal link branch 1-2-3-4. For example, the node 1 is the source node the node 4 is the receiving node.

Assuming that the following link branches can be selected by calculation by the control plane elements CPE:
Nominal link branch 1-2-3-4;
alternative link branch 1-5-3-4 for faults occurring in node 2, link 1-2 and/or bundle of links 2-3;
alternative link branch 1-2-7-4 for faults occurring in node 3, bundle of links 2-3 and/or link 3-4;
alternative link branch 1-5-2-3-4 for faults occurring in link 1-2;
alternative link branch 1-2-5-3-4 for faults occurring in bundle of links 2-3;
alternative link branch 1-2-3-6-4 for faults occurring in link 3-4.

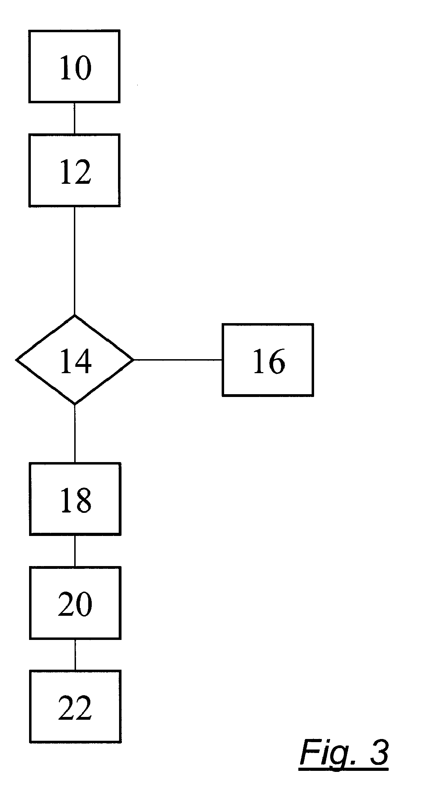

Figure 3 shows the flow diagram for restoring the connections if a fault F occurred on one link of the bundle 2-3.

The routine of restoration starts in a step 10, where the fault F in the network is detected by means of the data plane element DPE of the adjacent node 2.

In a step 12 the affected connections are determined by means of the control plane element CPE of the adjacent node 2.

In a step 14 those of the affected connections are identified by means of the control plane element CPE of the adjacent node 2, that can be restored locally by use of one of the parallel links intact within the bundle 2-3.

In step 16 those affected connection, which can be restored locally are restored locally by use of the data plane element DPE of the adjacent node 2.

Those affected connections that cannot be restored locally by use of one of the parallel links within the bundle 2-3, are sorted in a step 18 by means of the control plane element CPE of node 2 in a list according to priority first and bandwidth second. The defining of the sorted list occurs independently from the local restoration of connections. However the locally restored connections can also be put on the list with special markings to avoide a re-initiation of their restoration.

In a step 20 the sorted list is send out in the control plane by the control plane element CPE of the node 2 to the control plane element CPE of the source node 1.

In a step 22 the alternate paths are calculated by use of the control plane element CPE of the source node 1. The replacement of nominal paths of the remaining affected connections through the above mentioned selected alternate link branches in the order of the list of sorted connections in the data plane is initiated by the data plane element CPE of the source node 1. The routine of restoration being then finished and will start again with step 10 by detecting another fault by at least one of the control plane elements CPE of the nodes 1 to 7.

The described network and the method to restoring connections in the network can also be used for applications other than telecommunication.

It must be understood that figures 1 and 2 are only schematic examples and that, in general, a telecommunication network comprises equipments of many different kinds and architectures. For example, real network elements may have several hundreds or even thousands of network node interfaces.

Instead of or additionally to nodes 1 and 4 each of the other nodes 2 to 6 can act as source nodes and/or receiving nodes for different connections. The invention can also be used for networks with several source nodes. Further several connections can be realized through different nominal paths simultaneously. Thereby each source node simultaneously can act as well as fault adjacent node or as receiving node for nominal paths of other source nodes.

A fault in one link affects in real a huge number of nomimal paths between different terminating network nodes, whereby each terminating network node usually has a number of nominal paths to different other terminating network nodes. The failure adjacent nodes send to the terminating network nodes of failed nominal paths each a sorted list of only of its affected nominal paths. So each affected terminating network node receives its own list only of its failed connections to be restored.

It is possible, that not all nodes contain all features for recovery. Possibly only source nodes can contain memory elements ME for storing the recovery information for the connections.

Further not all nodes of the network necessarily have control plane elements CPE. Those nodes, which do not have control plane elements are transparent for GMPLS.

The sequence of the steps of the routine of restoration can also be different to the description in figure 3. Some steps can also be performed simultaneously. For example the local restoration and the restoration according to the sorted list can be performed simultaneously.

Instead of putting the marked locally restored connections on the sorted list, the information about locally restored connections can also be send by the adjacent node(s) to the source node independent from the sorted list.

Instead of or additionally to the fault adjacent node 2, one or more other fault adjacent node, in the described network for example node 3, can perform the steps 10 to 20 of the routine of restoration.

## Claims

1. Method for restoring connections in a network, in particular in a telecommunication network, the network being provided with a data plane, a control plane and a number of nodes (1, 2, 3, 4, 5, 6, 7), comprising:
- detecting and localizing a fault (F) within the network,
- determining affected connections,
- selecting alternative paths (1-5-3-4, 1-2-7-4, 1-5-2-3-4, 1-2-5-3-4, 1-2-3-6-4) available to recover saidfailed connections,
- replacing nominal paths (1-2-3-4) of the affected connections with selected alternative paths (1-5-3-4, 1-2-7-4, 1-5-2-3-4, 1-2-5-3-4, 1-2-3-6-4) for realizing said connections,
**characterized in**
- detecting the fault (F), determining the affected connections, defining and sorting a list of affected connections according to priority and bandwidth and sending out the list in the control plane using a control plane element (CPE) of a fault adjacent node (2),
- receiving the sorted list and initiating the replacing of nominal paths (1-2-3-4) of the affected connections with selected alternative paths (1-5-3-4, 1-2-7-4, 1-5-2-3-4, 1-2-5-3-4, 1-2-3-6-4) in order of the list of sorted connections, using control plane elements (CPE) of terminating network nodes (1) of the affected nominal paths (1-2-3-4).

2. Method according to claim 1, in which the list of affected connections is sorted according to priority first and to bandwidth second.

3. Method according to claim 1 or 2, in which for each affected terminating network node (1) a sorted list only of those affected connections which belong to said affected terminating network node (1) is created and sended.

4. Method according to one of the claims 1 to 3, in which if the fault occurs in a link which is part of a bundle (2-3) of parallel links, it is identified which of said affected connections can be restored by at least one of said parallel links within the same bundle (2-3) and said identified affected connections are restored locally in particular by use of the control plane element (CPE) of the fault adjacent node (2) and those affected connections, which cannot be restored by one of said parallel links within a same bundle (2-3) are sorted in said list and replaced in the order of said list.

5. Method according to claim 4, in which those affected connections which can be restored by a parallel link are restored independently from the order in which said list is sorted.

6. Control plane element (CPE) for a network with a data plane and a control plane, in particular a telecommunication network,
**characterized in that**
it is adapted for detecting a fault (F) within the network, determining the affected connections, defining and sorting a list of affected connections according to priority and bandwidth and sending out the list in a control plane.

7. Network with a data plane and a control plane, in particular a telecommunication network,
**characterized by**
a number of control plane elements (CPE) being adapted for detecting a fault (F) within the network, determining affected connections, defining and sorting a list of affected connections according to priority and bandwidth and sending out the list in a control plane.
